# EUROPEAN PATENT APPLICATION

(11) **EP 4 640 535 A1**
(43) Date of publication of application: **29.10.2025**
(21) Application number: 25171016.6
(22) Date of filing: 16.04.2025
(51) Int. Cl.: B62D 35/00

(54) **VEHICLE-BODY REAR STRUCTURE**

(30) Priority: 24.04.2024 JP 2024070525
(71) Applicant: MAZDA MOTOR CORPORATION, Hiroshima 730-8670 (JP)
(72) Inventor: Nakata, Akihiro, Aki-gun, Hiroshima, 730-8670 (JP); Bessho, Masaaki, Aki-gun, Hiroshima, 730-8670 (JP); Okamoto, Satoshi, Aki-gun, Hiroshima, 730-8670 (JP)
(74) Representative: Behr, Wolfgang

(57) **Abstract**

There are provided a lid body, a rear pillar, and a duct having a duct-inlet portion and a duct-outlet portion. The duct-inlet portion takes in traveling air flowing down along an outer surface of a vehicle-body side face portion. The duct-outlet portion discharges the traveling air passing through an inside of the rear pillar from a vehicle-body rear face portion. A side spoiler portion protruding rearward from an outward-side point of the duct-outlet portion over a range of a vertical width of the duct-outlet portion is provided.

## Description

### BACKGROUND OF THE INVENTION

The present invention relates to a vehicle-body rear structure which comprises a lid body constituting part of a vehicle-body rear face portion and a rear pillar extending in a vertical direction along each of right-and-left side-end side portions of the lid body and constituting part of a vehicle-body side face portion of a vehicle-body rear portion.

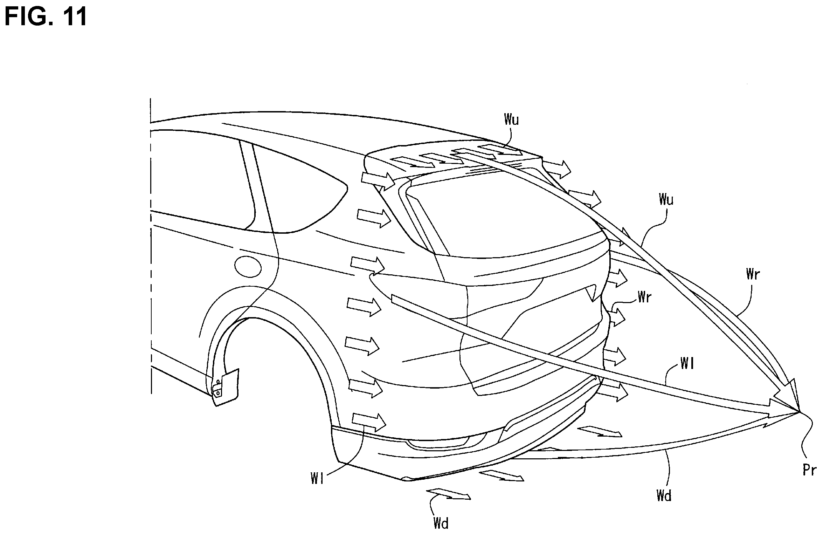

As shown in FIG. **11****,** in the vehicle traveling, traveling airs **Wu, Wd** which flow down along respective surfaces of a roof portion and an under floor and get separated from respective rear end portions of the surfaces approach to each other, in a vertical direction, downstream because of a negative-pressure zone generated therebetween. Likewise, traveling airs **Wl, Wr** which get separated from respective rear end portions of surfaces of right-and-left side face portions of the vehicle body approach to each other, in a lateral direction, downstream.

In general, as shown in FIG.**11**, it has been considered that it is ideal to control the traveling airs **Wu, Wd, Wl, Wr** such that they gather at a point **Pr** which is away from the vehicle body by a specified distance, like a rear end of a spindle shape, in order to reduce the air resistance (aerodynamic drag) of the traveling vehicle.

Herein, as shown in FIG. **11****,** the above-described traveling airs **Wu, Wd** are easy to control such that they gather at the point **Pr** because a roof spoiler and a floor undercover prevail in SUV. Accordingly, the aerodynamics measures for the traveling airs getting separated from the rear end portions of the respective surfaces of the roof portion and the under floor seem to have settled down for the normal commercial vehicles.

However, further reduction of the air resistance has been recently demanded from needs to increase the cruising distance of electric vehicles (EV) or the like. Therefore, it may be considered to provide a roof side spoiler which has a long rearward protrusion like the roof spoiler at both sides of the vehicle-body rear face portion in order to improve the aerodynamic performance for respective outer surfaces of the right-and-left side face portions of the vehicle body. However, there was a limit regarding exterior designing of the vehicle in providing the large-sized roof side spoiler at the both sides of the vehicle-body rear face portion.

Thus, as disclosed in Japanese Patent Laid-Open Publication No. 2012-126326 (WO2023185583A1), for example, various measures for properly making the traveling airs getting separated from the rear end portions of the outer surfaces of the right-and-left side face portions of the vehicle body gather at a single point downstream, maintaining the good exterior design of the vehicle-body rear portion, have been devised.

In a side vehicle-body structure of a vehicle of the above-described patent document, there is provided an air-supply route body which comprises a traveling-air inlet port to take in traveling air from a vehicle forward side and a traveling-air discharge port to discharge the taken-in traveling air to a vehicle rearward side are provided at a rear pillar arranged at a side face portion of the vehicle-body rear portion, an air duct as an air-supply route which communicates the above-described inlet port with the above-described discharge port in a longitudinal direction is formed between the air-supply route body and a rear pillar outer of the rear pillar.

The inventors of the present invention have paid attention to the fact that it is effective to deflect the traveling air flowing down toward a vehicle-body central side in a plan view when the traveling air gets separated from a vehicle-body rear end in order to make the traveling airs flowing down along the outer surface of the vehicle-body side face portion gather at a specified single point downstream.

Herein, the side vehicle-body structure of the above-described patent document has a technical idea that the traveling air rearward discharged from the discharge port of the air duct (the air-duct discharge flow) is made to serve as an air curtain in order to prevent the traveling air flowing down along the outer surface of the air-supply route body at the vehicle-body side face portion of the vehicle-body rear portion from flowing into a vehicle rear face (turbulence occurrence). That is, the side vehicle-body structure disclosed in the patent document does not focus on any technical idea of actively deflecting the traveling air flowing down along the vehicle-body side face portion of the vehicle-body rear portion toward the vehicle-body central side in the plan view when the traveling air gets separated from the rear end portion of the vehicle-body side face portion.

### SUMMARY OF THE INVENTION

The present invention has been devised in view of the above-described matter, and an object of the present invention is to provide a vehicle-body rear structure which can properly reduce the air resistance (aerodynamic drag) by making the traveling airs getting separated from the rear end portions of the respective surfaces of the right-and-left side face portions of the vehicle body gather substantially at the specified single point downstream by means of their deflection toward the vehicle-body central side in the plan view.

The present invention is a vehicle-body rear structure comprising a lid body constituting part of a vehicle-body rear face portion, a rear pillar extending in a vertical direction along each of right-and-left side-end side portions of the lid body and constituting part of a vehicle-body side face portion of a vehicle-body rear portion, and a duct-forming member having a duct-inlet portion and a duct-outlet portion and forming a duct to communicate the duct-inlet portion with the duct-outlet portion in a vehicle longitudinal direction, the duct-inlet portion being configured to take in traveling air flowing down along an outer surface of the vehicle-body side face portion on a forward side of the rear pillar, the duct-outlet portion being configured to discharge the taken-in traveling air from the vehicle-body rear face portion, characterized in that a side spoiler is provided at a rear side of said duct-forming member over at least a range of a vertical width of the duct-outlet portion and protrudes rearwardfrom a vehicle width outer side of the duct-outlet portion.

According to the present invention, both the reduction of the air resistance of the traveling vehicle and the good exterior design of the vehicle-body rear portion can be attained. Specifically, the traveling air (referred to as a "side-face flowing" as well) flowing down along the outer surface of the vehicle-body side face portion of the vehicle-body rear portion (the outer surface of the rear pillar) can be greatly deflected inward, in the vehicle width direction, of the vehicle body through cooperation of the side spoiler and the air flowing discharged from the duct-out portion. In particular, traveling air discharged from the duct-outlet portion flows faster than the side face flow, thereby performing the ejector effect (suction effect) to draw inward in the plan view. This ejector effect can promote the inward-directed deflection of a side-face passing rear flow which has got separated from the rear end portion of the side spoiler portion and flows down rearward.

In an embodiment of the present invention, an outer surface of the side spoiler is configured to be smoothly continuous with a rear end of an outer surface of the duct forming member and is preferably inclined relative to the longitudinal direction such that its rear side is positioned inward in a horizontal-section view.

In an embodiment of the present invention, the outer surface of the side spoiler has a rear narrowing angle which is larger than a rear-end angle of the outer surface of the duct forming member in a horizontal section.

According to this aspect of the present invention, the traveling air (referred to as a "side-face flowing" as well) flowing down along the outer surface of the vehicle-body side face portion of the vehicle-body rear portion (the outer surface of the rear pillar) can be greatly deflected inward, in the vehicle width direction, of the vehicle body through cooperation of the side spoiler having the shape defined above such as the rear narrowing angle (referred to as a "rear-end angle" as well) which is larger than that of the duct forming member and the air flowing discharged from the duct-out portion.

Accordingly, the traveling airs getting separated from the rear end portions of the respective outer surfaces of the roof portion, the vehicle-body under floor, and the right-and-left vehicle-body side portions (hereafter, referred to as a "vehicle-body passing rear flow" as well) can be made to gather substantially at the rear end of the spindle shape, so that the air resistance of the traveling vehicle can be reduced properly. Further, since the side-face flowing can be greatly deflected inward, in the vehicle width direction, of the vehicle body when getting separated from the rear end portion of the vehicle-body side face portion, suppressing increasing in size of the side spoiler, the good exterior design of the vehicle-body rear portion can be maintained.

In an embodiment of the present invention, the rear narrowing angle of the side spoiler may be set within a range of 25° and more and 29° or less.

According to this structure, the side-face flowing can be greatly deflected inward, in the vehicle width direction, of the vehicle body when getting separated from the rear end portion of the vehicle-body side face portion through cooperation with the ejector effect by means of the air flowing discharged from the duct-outlet portion.

In another embodiment of the present invention, a width of the duct in the horizontal section may be set within a range of 6mm or more and 40mm or less.

According to this structure, the air-flowing direction of the side-face flowing can be set at a desired inward-directed angle when the side-face flowing gets separated from the rear end portion of the vehicle-body side face portion.

In another embodiment of the present invention, a quarter window is provided at a vehicle-body side face positioned between a rear end portion of a rear door and said rear pillar, the quarter window extends in a longitudinal direction such that a rear end portion thereof is located at a position of the duct-inlet portion and an outer surface of the quarter window may be inclined relative to the longitudinal direction such that its rearward side is positioned inward more than its forward side and preferably such that a rearward side thereof is inclined more than its forward side.

According to this structure, the quarter window can be utilized as an air-guide plate to actively take the side-face flowing going down along the vehicle-body side face portion into the duct-inlet portion. Further, an air-guide section (section to make a run-up) which is sufficiently long in the longitudinal direction can be formed, maintaining the good-looking vehicle-body side face portion by using the quarter window without providing any other particular air-guide member. That is, the side-face flowing going down rearward along the vehicle-body side face portion can be guided into the duct-inlet portion.

In another embodiment of the present invention, a vehicle width inner side of the duct-outlet portion may be formed by a side end portion of the lid body constituting part and in particular by a side garnish of the lid body constituting part.

In another embodiment of the present invention, the duct-forming member may comprise a pillar-duct forming member which is provided on an outward side, in the vehicle width direction, of a rear pillar outer panel of the rear pillar so as to jointly form the duct together with the rear pillar outer panel therebetween; and the side spoiler may be configured to protrude rearward from a rear end portion of the pillar-duct forming member.

According to this structure, since the rear pillar outer of the rear pillar is used in forming the duct, another member provided at the rear pillar, such as a pillar reinforcement, needs not to have a penetration hole for the duct which is formed additionally. Further, since the pillar-duct forming member and the side spoiler can be formed integrally such that they are continuous in the longitudinal direction, the duct can be easily provided inside the rear pillar, maintaining the superior aerodynamic performance of the side-face flowing.

In another embodiment of the present invention, a forward part of a vehicle width inner side surface of the duct may be formed by the rear pillar outer panel and a rearward part of the vehicle width inner side surface of the duct may be formed by the side-end portion of the lid body constituting part, wherein the side-end portion preferably extends continuously with the rear pillar outer panel in the longitudinal direction.

In another embodiment of the present invention, the position of the rear end portion of the pillar-duct forming member may match, in the vehicle longitudinal direction, the position of the rear end of the side-end side portion of the lid body constituting part.

In another embodiment of the present invention, an outer surface of the rear pillar outer panel may be arranged on the inward side, in the vehicle width direction, of an outer surface of a door sash portion of the rear door, wherein a quarter window may be inclined inward in the horizontal-section view such that a rear end portion may be located at an inward end, in the vehicle width direction, of the duct-inlet portion.

In another embodiment of the present invention, the rear end portion of the quarter window may be joined to a front-end flange portion of the rear pillar outer panel from the vehicle outward side, wherein the rear pillar outer panel may be arranged in back of and adjacently to the rear end portion of the quarter window such that their outer surfaces may be smoothly continuous in the longitudinal direction.

In another embodiment of the present invention, the pillar-duct forming portion and the side spoiler may be formed by a duct garnish that is attached to the rear pillar outer panel from the vehicle outward side so as to form the duct, wherein the duct garnish is preferably made by hollow blow molding of a synthetic resin material.

In another embodiment of the present invention, the lid body constituting part may comprise a roof spoiler, and wherein right-and-left end portions of the roof spoiler may protrude obliquely outward-and-downward until their lower faces contact an upper end portion of the side spoiler, wherein respective rear end portions of the roof spoiler and the side spoiler may match each other in the vehicle longitudinal direction and may be smoothly continuous with each other in the vertical direction in the vehicle side view

The present invention further comprises a vehicle comprising a vehicle-body rear structure as described above.

Thus, the present invention can provide the vehicle-body rear structure which can properly reduce the air resistance of the traveling vehicle, maintaining the good exterior design of the vehicle-body rear portion.

The present invention will become apparent from the following description which refers to the accompanying drawings.

### BRIEF DESCRIPTION OF THE DRAWINGS

FIG. **1** is an exterior view of a vehicle-body rear portion of a vehicle provided with a vehicle-body rear structure of the present embodiment, when viewed obliquely from a rear-left side.
FIG. **2** is a left side view of the vehicle-body rear portion of the vehicle shown in FIG. **1****.**
FIG. **3** is a sectional view of a major part taken along line A-A of FIG. **2****.**
FIG. **4** is an enlarged sectional view of a major part of FIG. **3****.**
FIG. **5** **is** an exterior view of a duct garnish of the vehicle shown in FIG. **1****,** when viewed obliquely from a front-outward side.
FIG. **6** is an enlarged exterior view of the vehicle-body rear portion of the vehicle shown in FIG. **1****,** when viewed obliquely from the rear-left side.
FIG. **7** is a plan view showing traveling airs flowing along an outer surface of a vehicle-body side face portion of the vehicle-body rear portion in vehicle traveling according to the present embodiment.
FIG. **8A** is an enlarged left side view of a major part of the vehicle-body rear portion of the vehicle provided with a vehicle-body rear structure according to a modification; FIG. 8B is a sectional view of a major part taken along line B-B of FIG. **8A****.**
FIG. **9** is a graph showing simulation results of verifying the effectiveness of the vehicle-body rear structure according to the modification.
FIG. **10** is a plan view showing traveling airs flowing along an outer surface of a vehicle-body side face portion of a vehicle-body rear portion of a conventional example.
FIG. **11** is an exterior view of the vehicle-body rear portion of the vehicle, when viewed obliquely from the rear-left side, which explains an ideal situation where the traveling airs getting separated from respective rear end portions of the right-and-left vehicle-body side faces gather at a specified point which is rearward away from the vehicle body.

### DETAILED DESCRIPTION OF THE INVENTION

Hereafter, an embodiment of the present invention will be described referring to the drawings.

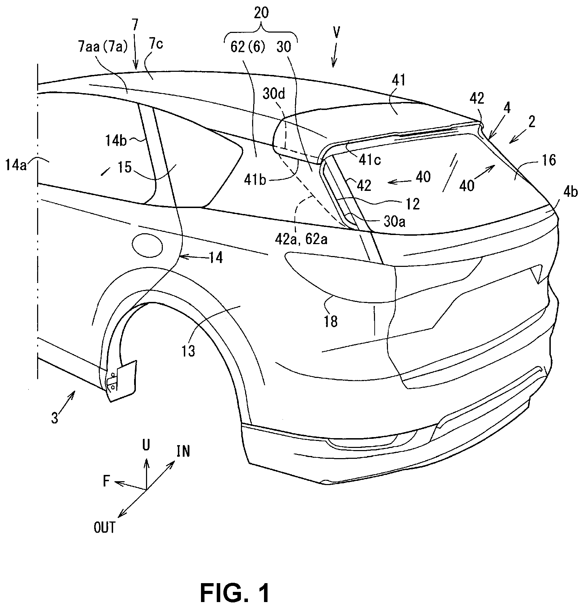

As shown in FIG. **1****,** a vehicle **V** provided with a vehicle-body rear structure of the present embodiment is a hatch-back type passenger car which comprises a lift-up type lift gate **4** at a vehicle-body rear face portion **2.** In figures, an arrow F shows a vehicle-body front (forward) side, an arrow U shows a vehicle-body upper (upward) side, an arrow OUT shows an outward side, in a vehicle width side, of a vehicle body, and an arrow IN shows an inward side, in the vehicle width side, of the vehicle body. Herein, a lateral direction of the vehicle body is based on a passenger seated in a driver's seat. Further, since right-and-left vehicle-body side face portions **3** of a vehicle-body rear portion of the present embodiment is laterally symmetrical, the left-side vehicle-body side face portion **3** will be described mainly.

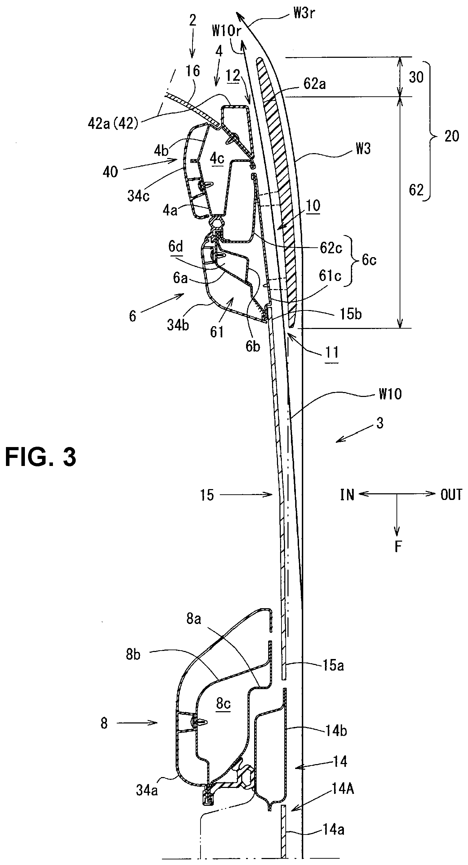

As shown in FIG. **3****,** a middle pillar **8** and a rear pillar **6** are provided at each of the right-and-left vehicle-body side face portions **3** of the vehicle-body rear portion of the vehicle **V** of the present embodiment. These pillars **8, 6** are provided to extend in a vertical direction and form part of each of the vehicle-body side face portions **3** of the vehicle -body rear portion, and are separated from each other in a longitudinal direction and support a rear portion of a roof portion 7 which covers over an upper portion of a cabin (see FIG.**1**).

The middle pillar **8** is formed by a middle pillar outer **8a** and a middle pillar inner **8b** which are fixedly joined together, and has a middle-pillar closed-cross section **8c** extending in the vertical direction therein.

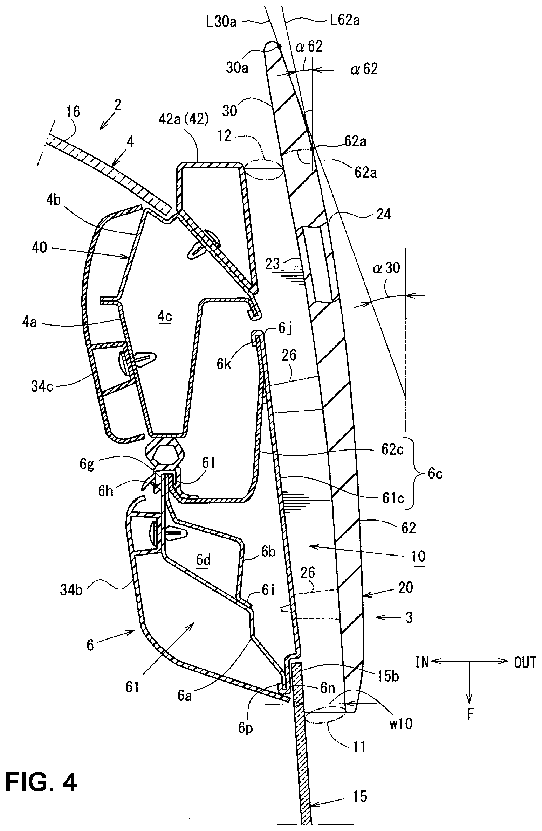

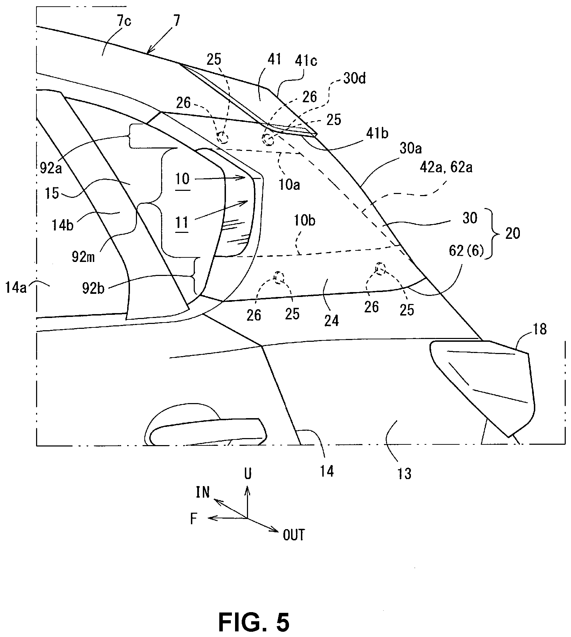

As shown in FIGS. **3** and **4****,** the rear pillar **6** comprises a rear-pillar body portion **61** and a pillar-duct forming portion **62.** The pillar-duct forming portion **62** is arranged on the outward side, in the vehicle with direction, of an outer surface of the rear-pillar body portion **61.** A duct **10** is formed between the rear-pillar body portion **61** and the pillar-duct forming portion **62.** As shown in FIGS. **4** and **5****,** the duct **10** has a duct-inlet portion **11** at its front end portion. The duct-inlet portion **11** takes in the traveling air flowing down along an outer surface (a quarter window **15** described later) of the vehicle-body side face portion **3** on a forward side of the rear pillar **6.**

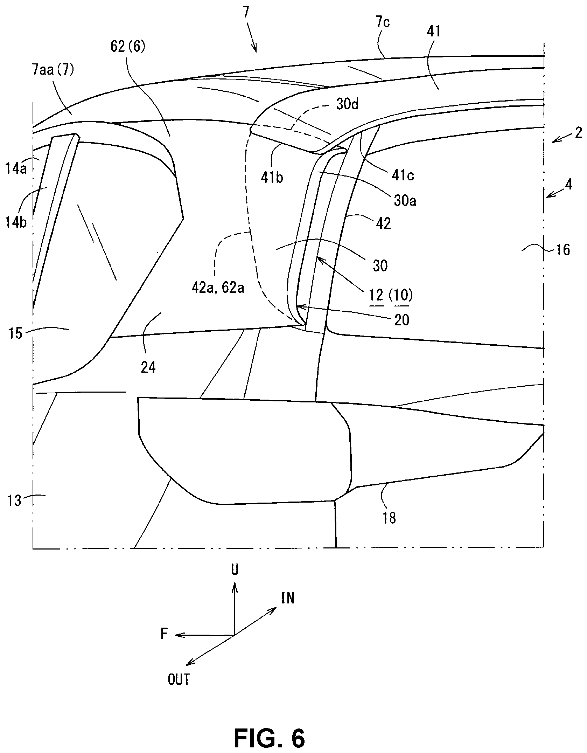

As shown in FIGS. **4** and **6****,** a duct-outlet portion **12** is provided at a rear end portion of the duct **10.** The duct-outlet portion **12** discharges the traveling air passing through an inside of the rear pillar **6** (i.e., inside the duct **10)** from each of the right-and-left both sides of the vehicle-body rear face portion **2.** That is, the duct **10** communicates the duct-inlet portion **11** with the duct-outlet portion **12** in the vehicle longitudinal direction. The pillar-duct forming portion **62,** the duct **10,** the duct-inlet portion **11** and the duct-outlet portion **12** will be specifically described later.

As shown in FIG. **4****,** the rear-pillar body portion **61** comprises a rear pillar inner **6a,** a rear-pillar reinforcement **6b,** and a rear pillar outer **6c.** The rear pillar inner **6a** and the rear-pillar reinforcement **6b** are joined together at respective inward rear-end flange portions **6g, 6h** which are positioned at their inward-side rear ends. A front-end flange portion **6i** of the rear-pillar reinforcement **6b** is joined to a midway part, in the longitudinal direction and in the vehicle width direction, of the rear pillar inner **6a.** Thereby, a rear-pillar closed-cross section **6d** extending in the vertical direction is formed between the rear pillar inner **6a** and the rear-pillar reinforcement **6b.**

The rear pillar outer **6c** is a metal-made panel as a non-decoration panel, which comprises a pillar side-face outer panel **61c** and a pillar side-end-side outer panel **62c.** The pillar side-face outer panel **61c** is arranged on the outward side, in the vehicle width direction, of the rear pillar inner **6a** and the rear-pillar reinforcement **6b.** The pillar side-end-side outer panel **62c** is arranged on the rearward side of the rear-pillar reinforcement **6b,** and forms a side-end side of each of the right-and-left sides of a rear opening of the cabin (luggage room) at the vehicle-body rear face portion **2.** Herein, a rear end portion **6j** of the pillar side-face outer panel **61c** and an outward end portion **6k** of the pillar side-end-side outer panel **62c** are joined together.

An inward-side flange portion **6l** of the pillar side-end-side outer panel **62c** is joined to the inward rear-end flange portion **6g** of the rear-pillar reinforcement **6b** from an outward side, in the vehicle width direction, of the vehicle body. Further, the pillar side-face outer panel **61c** and the rear pillar inner **6a** are joined together at their front-end flange portions **6n, 6p.**

As shown in FIGS. **1****,** **2****,** **5** and **6****,** the roof portion **7** comprises a pair of right-and-left roof side rails **7a** extending longitudinally, a header (not illustrated) interconnecting respective rear end portions of the roof side rails **7a,** a roughly rectangular-shaped roof panel **7c** covering over a hole area between the pair of roof side rails **7a,** and others.

Each of the roof side rails **7a** is formed by fixedly joining a roof-side rail outer **7aa** and a roof-side rail inner (not illustrated), and the roof side rail **7a** has a roof-side closed-cross section (not illustrated) extending in the vehicle longitudinal direction.

The above-described rear header (not illustrated) forms an upper-end side of the rear opening of the cabin (luggage room) at the vehicle-body rear face portion **2,** and constitutes a rear-header closed-cross section portion (not illustrated) extending in the vehicle width direction together with the roof panel **7c.**

As shown in FIG. **3****,** a door opening **14A** where a rear door **14** is provided is formed between the middle pillar **8** (quarter pillar, C pillar) and a center pillar (B pillar) arranged on its forward side. The rear door **14** is pivotally attached to the center pillar at its front end so as to open and close the door opening **14A.** As shown in FIGS. **1** - **3****,** a rear door glass **14a** is provided at an upper part of the rear door **14,** and a door sash portion **14b** is provided at a rear end of the rear door **14.**

Further, the quarter window **15** (referred to as a "quarter glass" as well) is attached between the middle pillar **8** and the rear pillar **6** (D pillar). The quarter window **15** extends in the longitudinal direction in a roughly straight-line shape, and is provided at a portion of the vehicle-body side face portion **3** which is positioned between the rear pillar **6** and the door sash portion **14b** of the rear door **14.**

As shown in the horizontal section of FIG. **3****,** a front end portion **15a** of the quarter window **15** is joined to the middle pillar **8** from the vehicle outward side. As shown in FIG. **3****,** the door sash portion **14b** of the rear door **14** which is positioned at the rear end portion of the rear door glass **14a** is provided near a front side of the front end portion **15a** of the quarter window **15** such that their outer surfaces are smoothly continuous in the longitudinal direction.

Further, as shown in the horizontal section of FIG. **4****,** a rear end portion **15b** of the quarter window **15** is joined to the front-end flange portion **6n** of the pillar side-face outer panel **61c** of the rear pillar **6** from the vehicle outward side. The pillar side-face outer panel **61c** is arranged in back of and adjacently to the rear end portion **15b** of the quarter window **15** such that their outer surfaces are smoothly continuous in the longitudinal direction.

Moreover, as shown in the horizontal section of FIG. **3****,** the outer surface of the rear-pillar body portion **61** (the outer surface of the pillar side-face outer panel **61c)** is arranged on the inward side, in the vehicle width direction, of the outer surface of the door sash portion **14b.** Accordingly, the quarter window **15** is gently inclined inward in the horizontal-section view such that the rear end portion **15b** is located at an inward end, in the vehicle width direction, of the duct-inlet portion **11.**

Thereby, the traveling air flowing down along the outer surface of the quarter window **15** in front of the rear pillar **6** can be actively taken into the duct **10** from the duct-inlet portion **11** by utilizing the nature (property) of the traveling air flowing down closely along the outer surface of the vehicle body.

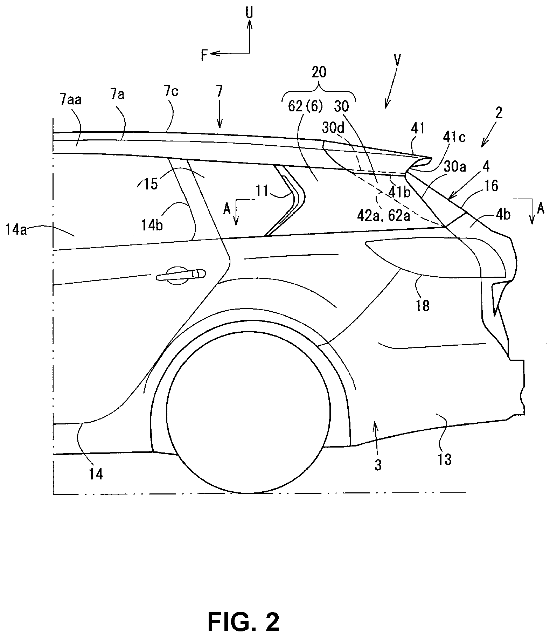

As shown in FIGS. **1** and **2****,** a rear fender panel **13** is provided in a downstream area of the quarter window **15** and the pillar side-face outer panel **61c** at the vehicle-body side face portion **3** of the vehicle-body rear portion such that it is continuous to the rear pillar **6.** That is, the quarter window **15** and the pillar side-face outer panel **61c** are provided such that their lower ends are positioned at a beltline portion of an upper end of the rear fender panel **13** and their upper ends are positioned at a lower portion of the roof side rail **7a.**

Next, the lift gate **4** will be described. The lift gate **4** is configured to open and close a rear luggage opening at the vehicle-body rear face portion **2.** The lift gate **4** comprises, as shown in FIG. **1****,** a metal-made inner panel **4a** (see FIG. **4**), a metal-made outer panel **4b,** a rear window glass **16,** a synthetic-resin-made roof spoiler **41,** a side garnish **42,** and so on, and is formed in a curved shape as a whole such that its upper side is located at a forward side in its side view. The outer panel **4b** has an outer surface excluding an upper-end side portion of the lift gate 4, and an inside lamp portion of a rear combination lamp **18,** a rear wiper mechanism, and others are installed therein.

Both-side side-end side portions **40** of the lift gate **4** are formed by the metal-made inner panel **4a** and the metal-made outer panel **4b** which are fixedly joined together, and a closed-cross section **4c** extending in the vehicle vertical direction is formed between these panels **4a, 4b.** Herein, as shown in FIG. **3****,** trims **34a, 34b, 34c** are provided at respective cabin insides of the middle pillar **8,** the rear pillar **6,** and the side-end side portions **40** of the lift gate **4.** The side-end side portions **40** constitute the right-and-left both sides of the vehicle-body side face portion **2** and also a rear end portion of the vehicle-body side face portion **3.**

As shown in FIGS. **1** and **4****,** the side garnish **42** is attached to the metal-made outer panel **4b** of the right-and-left side-end side portions **40** of the lift gate **4** along the side-end side portions **40.** A high-mount stop lamp (not illustrated) to light up in synchronization with a stop lamp of the rear combination lamp **18** is installed at the side garnish **42** and a rear portion of the roof spoiler **41.**

The side garnish **42** is attached to a rear face of the metal-made outer panel **4b** at the side-end side portion **40** of the lift gate **4** via a grommet. An outer surface of the side garnish **42** is smoothly continuous from an outer surface of the pillar side-face outer panel **61c** when the lift gate **4** is closed. Herein, the rear pillar **6** extends in the vertical direction along the side-end side portion **40** of the lift gate **4** such that it constitutes part of the vehicle-body side face portion **3** of the vehicle-body rear portion together with the side-end side portion **40** of the lift gate **4.**

As shown in FIG. **1****,** the roof spoiler **41** covers over an upper-end side portion of the rear window glass **16,** and constitutes part of the outer surface of the lift gate **4** together with the outer panel **4b.** The roof spoiler **41** is formed in a roughly horizontal shape, and protrudes rearward from a rear end portion of the roof panel **7c** in the side view.

As shown in FIG. **1** and **6****,** right-and-left both end portions of the roof spoiler **41** are configured to curve downward along an extension line of the right-and-left both end portions of the roof side rails **7a** in the vehicle back view. Further, as shown in FIGS. **1** and **2****,** a rearside end portion extending in the vehicle width direction of the roof spoiler **41** is configured such that its central part is located on a rearward side of its both-side parts. The roof spoiler **41** protrudes rearward such that its upper face has substantially the same level as an upper face of the roof panel **7c** without creating any intersection angle therebetween.

Further, as shown in FIGS. **1 - 6****,** a duct garnish **20** to deflect the traveling air flowing down along the outer surface of the vehicle-body side end portion **3** toward the inward side, in the vehicle width direction, of the vehicle body at a position of the rear end portion of the vehicle-body side face portion **3** is provided at each of the right-and-left vehicle-body side face portion **3** of the vehicle-body rear portion.

The duct garnish **20** is made by a hollow blow molding of a synthetic resin material and has an appropriate thickness in the vehicle width direction, and is a plate-shaped member extending in the vertical direction and in the longitudinal direction. The duct garnish **20** is comprised of the pillar-duct forming portion **62** and a side spoiler potion **30.**

As shown in FIG. **4****,** the pillar-duct forming portion **62** extends rearward beyond a rear end portion of the rear-pillar body portion **61,** i.e., the rear end portion **6j** of the pillar side-face outer panel **61c.** Specifically, the pillar-duct forming portion **62** extends rearward such that the position of its rear end portion **62a** substantially matches, in the vehicle longitudinal direction, the position of a rear end portion of the side-end side portion **40** of the lift gate **4,** i.e., a rear end portion **42a** of the side garnish **42.**

Accordingly, as shown in FIG. **4****,** the duct **10** is formed in the roughly continuous shape along the longitudinal direction in the horizontal-section view, not only between the pillar-duct forming portion **62** and the rear-pillar body portion **61** but also between the pillar-duct forming portion **62** and the side-end side portion **40** of the lift gate **4,** specifically the side garnish **42.**

That is, the duct-outlet portion **12** at the rear end portion of the duct **10** is arranged at the same position, in the longitudinal direction, of the rear end portion **42a** of the side garnish **42** (see FIG. **4****).** Further, as shown in FIG. **4****,** a width **w10** of the horizontal section of the duct 10, particularly the width **w10** of the duct-inlet portion **11,** is set at about 34mm which is within a range of 6mm or more and 40mm or less.

As shown in FIG. **5****,** the duct **10** is formed in a middle area **92m,** in the vertical direction, of the pillar-duct forming portion **62.** At the pillar-duct forming portion **62** are formed a duct upper-wall portion **10a** partitioning an upper face of the duct **10** and a duct lower-wall portion **10b** partitioning a lower face of the duct **10** at respective upper-and-lower side end portions of the middle area **92m** in a longitudinal continuous shape. As shown in FIG. **4****,** each of the duct upper-wall portion **10a** and the duct lower-wall portion **10b** is formed over an entire length, in the longitudinal direction, of the pillar-duct forming portion **62,** and protrudes inward, in the vehicle width direction, from an inner face (back face) of the pillar-duct forming portion **62** up to its contacting position with respective outer surfaces of the pillar side-face outer panel **61c** and the side garish **42** in a rib shape.

Further, as shown in FIGS. **4** and **5****,** the duct garnish **20** is attached such that the pillar-duct forming portion **62** is attached to the metal-made pillar side-face outer panel **61c** from the vehicle outward side via a grommet **26.** Specifically, the pillar-duct forming portion **62** is formed in a hollow shape which has an inward wall portion **23** (see FIG. **4****)** and an outward wall portion **24** (see FIG. **4****)** in an upper-side area **92a** (see FIG. **5****)** and a lower-side area **92b,** and plural grommet attachment portions **25** (see FIG. **5****)** are provided at the inward wall portion **23** at intervals in the longitudinal direction.

As shown in FIG. **4****,** the duct garnish **20** is attached to the pillar side-face outer panel **61c** so as to form the duct **10** between the both members **20, 61c** by inserting the grommets **26** disposed at the grommet attachment portions **25** into penetration holes (not illustrated) which are provided at respective portions of the pillar side-face outer panel **61c** which correspond to the grommet attachment portions **25.** Herein, as shown in FIG. **5****,** while the duct **10** of the present embodiment is configured to have substantially the same vertical width over its longitudinal length in the middle area **92m** which is one third (1/3), in the vertical direction, of the pillar-duct forming portion **62,** the vertical width of the duct may be configured to change along the longitudinal direction or a duct passage may be configured to change vertically.

As shown in FIG. **4****,** the side spoiler **30** protrudes rearward from the rear end portion **62a** of the pillar-duct forming portion **62,** which corresponds to an outward side, in the vehicle width direction, of the duct-inlet portion **12,** over an entire vertical width of the duct-outlet portion **12.** Herein, as shown in FIG. **1****,** the side spoiler portion **30** of the present embodiment is formed over an entire vertical width of the pillar-duct forming portion **62.**

Further, as shown in FIGS. **1****,** **2****,** **5** and **6****,** right-and-left both end portions **41b** of the roof spoiler **41** protrude obliquely outward-and-downward until their lower faces contact an upper end portion **30d** of the side spoiler portion **30.** Respective rear end portions **41c, 30a** of the roof spoiler **41** and the side spoiler portion **30** match each other in the vehicle longitudinal direction, and are smoothly continuous from each other in the vertical direction in the vehicle side view.

As shown in the horizontal section of FIG. **4****,** the outer surface of the side spoiler portion **30** is configured to be continuous reward from the outer surface of the pillar-duct forming portion **62** which forms part of the outer surface of the vehicle-body side face portion **3** of the vehicle-body rear portion and configured such that its rear side is positioned gradually inward.

As shown in the horizontal section of FIG. **4****,** a tangent line **L30a** of the rear end portion **30a** of the outer surface of the side spoiler portion **30** is inclined relative to the longitudinal direction such that its rearward side is positioned inward more. An angle **α30** of the tangential line **L30a** of the rear end portion **30a** of the outer surface of the side spoiler portion **30** relative to the longitudinal direction is defined as a rear narrowing angle **α30** (referred to as a "rear-end angle" as well) of the outer surface of the side spoiler portion **30** in the horizontal section.

Likewise, as shown in the horizontal section of FIG. **4****,** the rear end portion of the outer surface of the vehicle-body side face portion **3** of the vehicle-body rear portion, that is - a tangential line **L62a** of the rear end portion **62a** of the outer surface of the pillar-duct forming portion **62** is inclined relative to the longitudinal direction such that its rear side is positioned gradually inward in the horizonal-section view. An angle **α62** of the tangential line **L62a** of the rear end portion **62a** of the outer surface of the pillar-duct forming portion **62** relative to the longitudinal direction is defined as a rear narrowing angle **α62** of the outer surface of the pillar-duct forming portion **62** in the horizontal section.

The outer surface of the side spoiler portion **30** is configured to have the rear narrowing angle **α30** which is larger than the rear narrowing angle **α62** of the outer surface of the pillar-duct forming portion **62** in the horizontal section. In the present embodiment, the rear narrowing angle **α62** of the outer surface of the pillar-duct forming portion **62** in the horizontal section is set at 19°, whereas the rear narrowing angle **α30** of the outer surface of the side spoiler portion **30** in the horizontal section is set at 25° which is within a range of 25° or more and 29° or less.

The vehicle-body rear structure of the above-described present embodiment comprises, as shown in FIGS. **1 - 6****,** the lift gate **4** (lid body) constituting part of the vehicle-body rear face portion **2,** the rear pillar **6** extending in the vertical direction along each of the right-and-left side-end side portions of the lift gate **4** and constituting part of the vehicle-body side face portion **3** of the vehicle-body rear portion, and the pillar-duct forming member **62** as a duct forming portion which is provided on the outward side, in the vehicle width direction, of the rear-pillar body portion **61** so as to form the duct **10** therebetween.

As shown in FIGS. **3** and **4****,** the duct **10** has the duct-inlet portion **11** which is configured to take in the traveling air flowing down along the quarter window **15** which forms part of the outer surface of the vehicle-body side face portion **3** on the forward side of the rear pillar **6.** The duct **10** further has the duct-outlet portion **12** configured to discharge the traveling air taken in (see **W10** in FIG. **3****)** from the vehicle-body rear face portion **2.** Herein, the duct **10** communicates the duct-inlet portion **11** with the duct-outlet portion **12** in the vehicle longitudinal direction.

Further, as shown in FIG. **4****,** the rear end portion **62a** of the pillar-duct forming portion **62** is positioned on the outward side, in the vehicle width direction, of the duct-outlet portion **12,** and the side spoiler portion **30** which protrudes rearward from the rear end portion **62a** of the pillar-duct forming portion **62** over at least a range of the vertical width of the duct-outlet portion **12** is provided at the rear side of the pilar-duct forming portion **62.**

Moreover, as shown in FIG. **4****,** the outer surface of the side spoiler portion **30** is configured to be smoothly continuous from the rear end portion **62a** of the outer surface of the pillar-duct forming portion **62** which constitutes part of the vehicle-body side face portion **30** and have the rear narrowing angle **α30** which is larger than the rear narrowing angle **α62** of the outer surface of the pillar-duct forming portion **62** in the horizontal section.

According to this structure, both the reduction of the air resistance of the traveling vehicle and the good exterior design of the vehicle-body rear portion can be attained. Specifically, the traveling air (referred to as the "side face flow **W3"** as well) (see FIG. **3****)** flowing down along the vehicle-body side face portion **3** of the vehicle-body rear portion can be deflected toward the central side, in the vehicle width direction, of the vehicle body when getting separated from the side spoiler portion **30.**

Further, the traveling air discharged from the duct-outlet portion **12** (hereafter, referred to as a "duct-passing rear flow **W10r"** as well) (see FIG. **3****)** flows faster than the side face flow **W3,** thereby performing the ejector effect (suction effect) to draw inward in the plan view. This ejector effect can promote the inward-directed deflection of a side-face passing rear flow **W3r** which has passed through (in other words, has got separated from) the rear end portion **30a** of the side spoiler portion **30** and flows down rearward (hereafter, referred to as a "side-face passing rear flow **W3r"** as well) (see FIG. **3****)**

That is, the side-face passing rear flow **W3r** can be deflected greatly inward, in the vehicle width direction, of the vehicle body through cooperation of the side spoiler portion **30** having the rear narrowing angle **α30** larger than the rear narrowing angle **α62** of the pillar-duct forming portion **62** and the duct-passing rear flow **W10r.**

Accordingly, the traveling airs getting separated from the rear end portions of the respective outer surfaces of the roof portion **7,** the vehicle-body under floor, and the right-and-left vehicle-body side portions **3** (hereafter, referred to as a "vehicle-body passing rear flow" as well) can be made to gather at the rear end of the spindle shape. In other words, the rearward point at which the right-and-left side-face passing rear flows **W3r** gather can be made to match a rearward point at which the traveling air getting separated from the rear end portion of the upper face of the roof spoiler **41** (hereafter, referred to as a "roof-face passing rear flow" as well) and the traveling air getting separated from the rear end portion of the vehicle-body under-floor surface (hereafter, referred to as an "under-floor passing rear flow" as well) gather. Consequently, the air resistance of the traveling vehicle can be reduced properly.

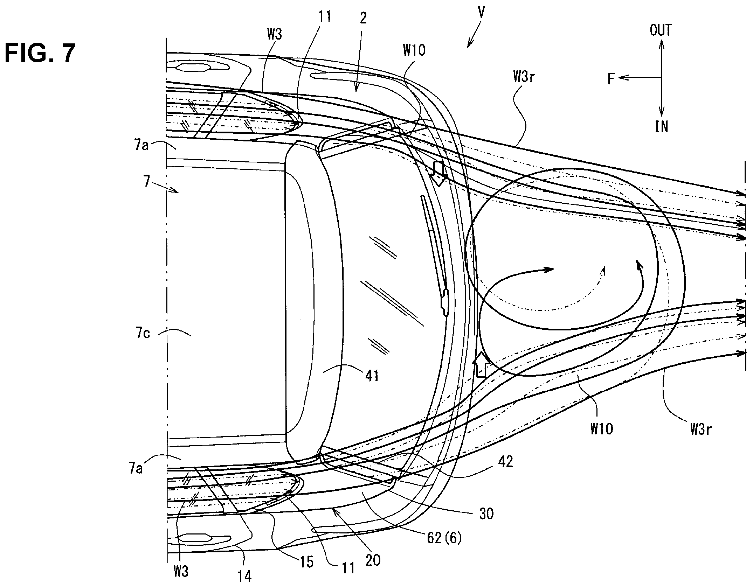

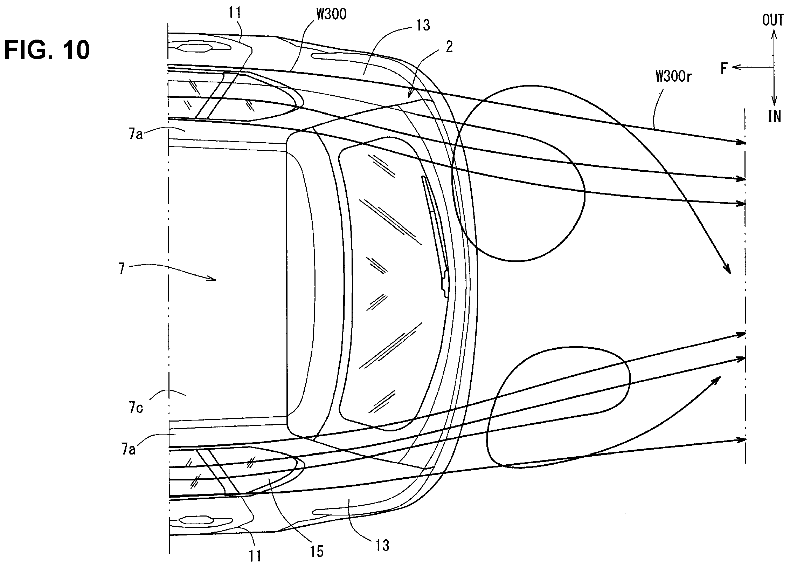

FIG. 7 is a plan view showing the side face flows **W3** and the side-face passing rear flows **W3r** by bold lines, and FIG. **10** is a plan view showing side face flows **W300** and the side-face passing rear flows **W300r** of a conventional example of a vehicle which is not provided with the duct **10** nor the side spoiler portion **30** by bold lines.

As shown in FIG. **7****,** in the vehicle of the present embodiment, since the function of drawing the side-face passing rear flow **W3r** inward (ejector effect) is performed by the duct-passing rear flow **W10r** shown by an imaginary line (see a white arrow in FIG. 7), it can be confirmed that the side-face passing rear flow **W3r** is deflected inward greatly compared to the side-face passing rear flow **W300r** of the conventional example of the vehicle shown in FIG. **10****.**

Further, in the vehicle of the present embodiment, since the inward-directed deflection of the side face flow **W3** is not achieved by the side spoiler portion **30** only but the side-face passing rear flow **W3r** is greatly deflected inward through its cooperation with the duct-passing rear flow **W10r** as described above, the side spoiler portion **30** can be suppressed from being large-sized and thereby the appropriate exterior design of the vehicle-body rear portion can be maintained. Further, the side spoiler portion **30** can be properly attached to the vehicle body, and the performance of rear-view visibility of a passenger through the rear window glass **16** is not hindered by the side spoiler portion **30.**

Also, since the pillar-duct forming portion **62** to form the duct **10** is provided on the outward side of the rear-pillar body portion **61** in cooperation with the rear-pillar body portion **61** in the present embodiment (see FIG. **4****),** it is unnecessary to form any penetration holes at components of the rear-pillar body portion **61,** e.g., the metal-made rear pillar inner **6a,** the metal-made rear pillar reinforcement **6b,** and the metal-made rear pillar outer **6c,** in order to form the duct **10.**

That is, the pillar-duct forming portion **62** can be made integrally with the side spoiler portion **30** by synthetic-resin molding as part of the duct garnish **20** such that they are continuous in the longitudinal direction. Accordingly, the pillar-duct forming portion **62** itself and the duct **10** can be easily provided, improving the aerodynamic performance of the side face flow **W3.**

In the embodiment of the present invention, as shown in FIG. **4****,** the rear narrowing angle **α30** of the side spoiler portion **30** is set within the range of 25° and more and 29° or less. According to this structure, the side-face passing rear flow **W3r** can be greatly deflected inward, in the vehicle width direction, of the vehicle body through cooperation with the ejector effect by means of the duct passing rear flow **W10r.**

In the embodiment of the present invention, as shown in FIG. **4****,** the width **w10** of the duct **10** in the horizontal section is set within the range of 6mm or more and 40mm or less. According to this structure, the side-face passing rear flow **W3r** can be set at a desired inward-directed angle.

In the embodiment of the present invention, as shown in FIG. **3****,** the quarter window **15** which extends in the longitudinal direction such that the rear end **15b** is located at the position of the duct-inlet portion **11** is provided at the vehicle-body side face **3** positioned between the rear end portion of the door sash portion **14b** of the rear door **14** and the rear pillar **6,** and the outer surface of the quarter window **15** is inclined such that its rearward side is inclined more.

According to this structure, the quarter window **15** can be utilized as an air-guide plate to actively take part of the side-face flow **W3** into the duct-inlet portion **11.** Thereby, the air-guide section (section to make the run-up) which is sufficiently long in the longitudinal direction can be formed, maintaining the good-looking vehicle-body side face portion **3** by using the quarter window **15** without providing any other particular air-guide member.

Further, the quarter window **15** can be provided to be gently inclined such that its rearward side is positioned inward more. Accordingly, the side face flow **W3** can be made to flow down rearward stably along the outer surface of the quarter window **15,** and the side face flow **W3** can be actively taken into the duct-inlet portion **11** by utilizing the nature (property) of the side face flow **W3** flowing down closely along the outer surface of the vehicle-body side face portion **3.**

In correspondence of the present invention to the above-described embodiment, the lid of the present invention corresponds to the lift gate **4** of the embodiment. Likewise, the side spoiler corresponds to the side spoiler portion **30,** and the pillar-duct forming member corresponds to the pillar-duct forming portion **62.** However, the present invention is not limited to the above-described embodiment, but any modifications are appliable.

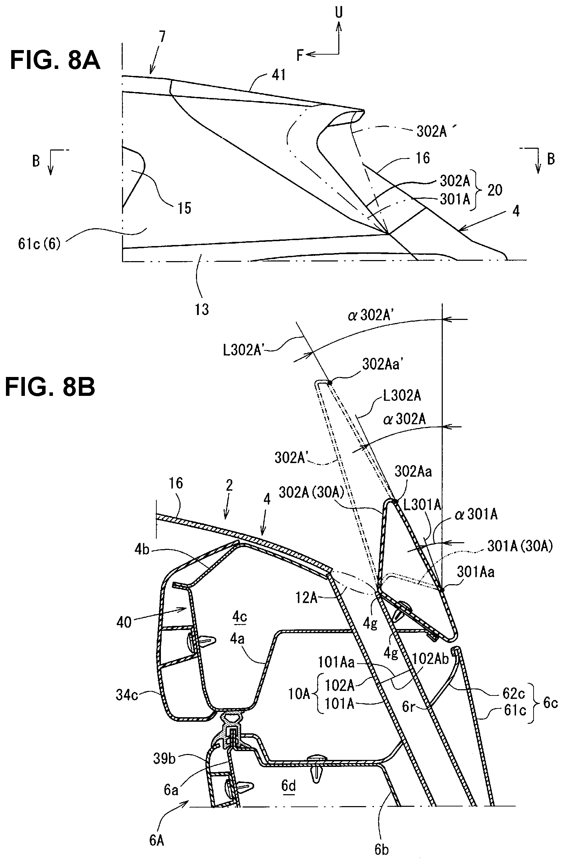

For example, a modification shown in FIGS. **8A** and **8B** is applicable to the vehicle-body rear structure of the present invention. Hereafter, this modification will be described referring to FIGS. **8A** and **8B****.** The same structures as the above-described embodiment have the same reference characters, and therefore their specific descriptions are omitted here.

The vehicle-body rear structure according to the modification does not have the duct garnish **20** provided on the outward, in the vehicle width direction, of the rear pillar **6,** i.e., the pillar-duct forming portion **62,** of the above-described embodiment shown in FIG. **4****.** As shown in FIG. **8B****,** a duct **10A** is formed over a range of a rear pillar **6A** and the side-end side portion **40** of the lift gate **4.**

The duct **10A** of the modification comprises a pillar duct **101A** which penetrates longitudinally an inside of the rear pillar **6A** and a side-end side portion duct **102A** which penetrates longitudinally an inside of the side-end side portion **40.** The duct **10A** is configured to longitudinally communicate an inlet portion **102Ab** positioned at a front end of the side-end side portion duct **102A** with an outlet portion **101Aa** positioned at a rear end of the pilar duct **101A** when the lift gate **4** is closed.

The pillar duct **101A** is held in a state where it is inserted into a penetration hole **6r** of the rear pillar outer **6c** (only the penetration hole 6r of a pillar side-end-side outer panel **62c** is illustrated). The side-end side portion duct **102A** is held in a state where it is inserted into a penetration hole **4g** which penetrates the metal-made inner panel **4a** and the metal-made outer panel **4b,** respectively.

A duct-inlet portion of the duct **10A** of the modification is provided at a front portion of the pillar side-face outer panel **61c,** which is not illustrated. Meanwhile, as shown in FIG. **8B****,** a duct-outlet portion **12A** is provided at a portion of the lift gate **4** which is positioned between the side-end side portion duct **102A** and the rear window glass **16** in the horizontal-section view.

As shown in FIGS. **8A** and **8B****,** an outward-side portion of the duct-outlet portion **12A** is provided with a side spoiler portion **30A** in place of the above-described side garnish **42** (see FIG. **4****).** As shown in FIG. **8B****,** the side spoiler portion **30A** comprises a spoiler base portion **301A** which is located at a position corresponding to the side garnish **42** and a rearward protrusion portion **302A** which protrudes rearward from a rear end portion **301Aa** of the spoiler base portion **301A** over a vertical width of the duct-outlet portion **12A,** which are formed integrally by synthetic-resin molding.

An outer surface of the side spoiler portion **30A** is configured to be smoothly continuous rearward from a rear end portion of the pillar side-face outer panel **61c** and such that its rearward side is positioned inward more.

Herein, the rear end portion **301Aa** of the spoiler base portion **301A** of the side spoiler portion **30A** is located at an outward position, in the vehicle width direction, of the duct-outlet portion **12A** and also at the rear end portion of the vehicle-body side face portion **3** of the vehicle-body rear portion. Accordingly, a rear narrowing angle **α301A** of the vehicle-body side face portion **3** of the vehicle-body rear portion of this modification means a rear narrowing angle of the outer surface of the spoiler base portion **301A** in the horizontal section, specifically an angle of a tangential line **L301A** of the rear end portion **301Aa** of the outer surface of the spoiler base portion **301A** of the side spoiler portion **30A** relative to the longitudinal direction.

Further, a rear narrowing angle **α302A** of the outer surface of the side spoiler portion **30A** of this modification means an angle of a tangential line **L302A** of a rear end portion **302Aa** of the outer surface of the rearward protrusion portion **302A** of the side spoiler portion **30A** relative to the longitudinal direction, which means a rear narrowing angle of the outer surface of the rearward protrusion portion **302A** in the horizontal section.

In the modification, the rear narrowing angle **α301A** of the outer surface of the spoiler base portion **301A** is set at 19°. Meanwhile, the rear narrowing angle **α302A** of the outer surface of the rearward protrusion portion **302A** is set at 25° which is within the range of 25° or more and 29° or less.

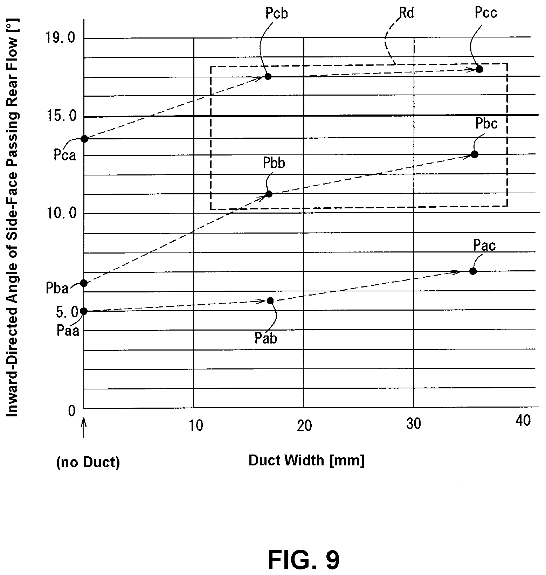

FIG. **9** is a graph showing simulation results of verifying an inward-directed deflection angle, in the horizontal-section view, of the passing rear flow of the rear end portion of the vehicle-body side face portion 3 of the vehicle-body rear portion in the vehicle traveling regarding samples of the present invention according to the rear vehicle-body structure of the modification or its related structure, and a comparative example and a conventional example.

Specifically, the graph of FIG. **9** shows relationships between the horizontal width **w10** of the duct **10A** and the inward-directed angle of the side-face passing rear flow **W3r** according to three kinds of rear narrowing angles in the cases where the side spoiler portion **30A** was provided or not, and the side spoiler portion **30A** was provided. That is, the lateral axis of FIG. **9** shows the horizontal width **w10** of the duct **10A,** and the vertical axis of FIG. **9** shows the inward-directed angle of the side-face passing rear flow **W3r.**

An area **Rd** which is enclosed by a broken line in FIG. **9** is an area where the simulation results obtained under the rear vehicle-body structure of the present invention are to be included. Herein, it is considered that 15° of an inward-directed deflection angle is an ideal angle.

In the conventional example where the duct **10A** and the rearward protrusion portion **302A** of the side spoiler portion **30A** were not provided, the result showing by a plot **Paa** in FIG. **9** was obtained. Meanwhile, in the conventional example where the duct **10A** was provided, the respective results showing by plots **Pab, Pac** in FIG. **9** were obtained in accordance with 17mm, 34mm of the horizontal width **w10** of the duct **10A,** respectively. That is, as shown in FIG. **9****,** in the respective conventional examples corresponding to the plots **Pab, Pac,** the respective inward-directed deflection angles of the side-face passing rear flow **W3r** were improved more than that of the conventional example corresponding to the plot **Paa** in FIG. **9****,** but both of them were below 8° and out of a range of the area **Rd.**

Further, while the rear narrowing angle of the side spoiler portion was set at 25°, the result shown by a plot **Pba** in FIG. **9** was obtained in the conventional example where the duct **10A** was not provided. That is, as shown in FIG. **9****,** in the conventional example corresponding to the plot **Pba,** the inward-directed deflection angle was below 8° and out of the range of the area **Rd.**

For the above-described conventional example corresponding to the plot **Pba,** in the samples of the present invention where the duct **10A** was provided, the results showing by the plots **Pbb, Pbc** in FIG. **9** were obtained in accordance with 17mm, 34mm of the horizontal width **w10** of the duct **10A,** respectively. That is, as shown in FIG. **9****,** in the respective samples of the present invention corresponding to the plots **Pbb, Pbc,** the respective inward-directed deflection angles of the side-face passing rear flow **W3r** were improved compared to the above-described conventional example corresponding to the plot **Pba** and exceeded 8°.

Further, in the comparative example where the duct **10A** was not provided but the rear narrowing angle of the side spoiler portion was set at 29°, the result showing by the plot **Pca** in FIG. **9** was obtained. That is, as shown in FIG. **9****,** in the comparative sample corresponding to the plot **Pca,** the inward-directed deflection angle of the side-face passing rear flow **W3r** exceeded 8°. Herein, in a case where a rear narrowing angle **α302A'** of the outer surface of the side spoiler portion was 29° like the comparative example, the rear narrowing angle **α302A'** means an angle of a tangential line **L302A'** of a rear end portion **302a'** of the outer surface of the side spoiler portion **30A** which is provided with a rearward protrusion portion **302A'** shown by a one-dotted broken line in FIG. **8** relative to the longitudinal direction.

Moreover, for the above-described comparative example corresponding to the plot **Pca,** in the sample of the present invention where the duct **10A** was provided, the results showing by the plots **Pcb, Pcc** in FIG. **9** were obtained in accordance with 17mm, 34mm of the horizontal width **w10** of the duct **10A.** That is, as shown in FIG. **9****,** in the respective samples of the present invention corresponding to the plots **Pcb, Pcc,** the respective inward-directed deflection angles of the side-face passing rear flow **W3r** were improved compared to the comparative example and exceeded 15°.

According to the above-described results shown in FIG. **9****,** it was confirmed that the cooperation of the side spoiler portion **30A** having the larger rear narrowing angle than the conventional side spoiler portion and the duct passing rear flow **W10r** could deflect the side-face passing rear flow **W3r** inward greatly.

Particularly, it was confirmed according to the results of the plots **Pbb, Pbc** in FIG. **9** that the inward-directed deflection angle of the side-face passing rear flow **W3r** could be improved considerably compared to the conventional example corresponding to the plot **Pba,** suppressing the rear narrowing angle **α302A** of the side spoiler portion **30A** (the rearward extension length of the rearward protrusion portion **302A)** relative to the rear narrowing angle **α302A'.**

Specifically, as shown in FIG. **8****,** the rearward protrusion length of the rearward protrusion portion **302A** of the side spoiler portion **30A** tends to become long when the rear narrowing angle of the outer surface of the side spoiler portion becomes large (see the rearward protrusion portions **302A, 302A'** in FIG. **8****).** Accordingly, by suppressing the rear narrowing angle **α302A** (25°) of the side spoiler portion relative to the rear narrowing angle **α302A'** (29°) of the side spoiler portion of the example of the present invention corresponding to the plots **Pcb, Pcc** in FIG. **9** like the example of the present invention corresponding to the plots **Pbb, Pbc** in FIG. **9****,** the side spoiler portion **30A** can be suppressed from being large-sized (the rearward protrusion length of the rearward protrusion portion **302A).** Consequently, the vehicle-body rear face portion **2** can maintain the good external design and the superior attachment performance to the vehicle body.

Further, it was confirmed from the results of the plots **Pbb, Pbc, Pcb, Pcc** in FIG. **8** that the inward-directed deflection angle of the side-face passing rear flow **W3r** in the case of 34mm of the horizontal width **w10** of the duct **10A** can be improved compared to the case of 17mm of the horizontal width **w10** of the duct **10A.** Herein, the present simulation was set such that the vehicle traveled at a constant speed of 140kph. In a case where the horizontal width **w10** of the duct **10A** was set at 17mm under this setting, the air speed at the duct-inlet portion (not illustrated) was 40kph and the air speed at the duct-outlet portion **12A** was 55kph. Meanwhile, in the case of 34mm of the horizontal width **w10** of the duct **10A,** the respective air speeds at the duct-inlet portion and the duct-outlet portion **12** were the same speed of 76kph.

According to the above-described results, it can be considered that in a case where the horizontal width **w10** of the duct **10A** was wider, the amount of air flow taken into the duct **10A** from the duct-inlet portion **11** increased and thereby the flowing speed of the traveling air flowing through the inside of the duct **10A** became faster, so that the flowing speed of the duct passing rear flow **W10r** increased as well. That is, the above-described results match the consideration that as the speed of the duct passing rear flow **W10r** increases, the performance of drawing the side-face passing rear flow **W3r** inward (the ejector effect) improves.

Herein, in correspondence of the present invention to the above-described modification, the side spoiler corresponds to the side spoiler portion **30A,** and the duct forming member corresponds to the pillar duct **101A** and the side-end side portion duct **102A.**

The vehicle-body rear structure of the present invention includes a structure which has the quarter window **15** and the middle pillar **8** at the vehicle-body side face portion **3** of the vehicle-body rear portion. Further, a sash-less type of door in which the rear door **14** does not have the door sash portion **14b** at its rear end is included as well.

## Claims

1. A vehicle-body rear structure, comprising:
a lid body constituting part (4) of a vehicle-body rear face portion (2);
a rear pillar (6) extending in a vertical direction along each of right-and-left side-end side portions of the lid body (4) and constituting part of a vehicle-body side face portion (3) of a vehicle-body rear portion (2); and
a duct-forming member having a duct-inlet portion (11) and a duct-outlet portion (12) and forming a duct (10) to communicate the duct-inlet portion (11) with the duct-outlet portion (12) in a vehicle longitudinal direction, the duct-inlet portion (11) being configured to take in traveling air flowing down along an outer surface of the vehicle-body side face portion (3) on a forward side of the rear pillar (6), the duct-outlet portion (12) being configured to discharge the taken-in traveling air from the vehicle-body rear face portion (3),
**characterized in that**
a side spoiler (30) is provided at a rear side of said duct-forming member over at least a range of a vertical width of the duct-outlet portion (12) and protrudes rearward from a vehicle width outer side of said duct-outlet portion (12).

2. The vehicle-body rear structure of claim 1, wherein an outer surface of said side spoiler (30) is configured to be smoothly continuous with a rear end of an outer surface of the duct forming member and is preferably inclined relative to the longitudinal direction such that its rear side is positioned inward in a horizontal-section view.

3. The vehicle-body rear structure of claim 1, wherein the outer surface of said side spoiler (30) has a rear narrowing angle (α30) which is larger than a rear narrowing angle (α62) of said outer surface of the duct forming member in a horizontal section.

4. The vehicle-body rear structure of claim 3, wherein the rear narrowing angle (α30) of said side spoiler (30) is set within a range of 25° and more and 29° or less.

5. The vehicle-body rear structure according to any one of the preceding claims, wherein a width (w10) of said duct (10) in the horizontal section is set within a range of 6mm or more and 40mm or less.

6. The vehicle-body rear structure according to any one of the preceding claims, wherein a quarter window (15) is provided at a vehicle-body side face (3) positioned between a rear end portion of a rear door (14) and said rear pillar (6), the quarter window (15) extends in a longitudinal direction such that a rear end portion (15b) thereof is located at a position of said duct-inlet portion (11) and an outer surface of said quarter window (15) is inclined relative to the longitudinal direction such that its rearward side is positioned inward more than its forward side and preferably such that a rearward side thereof is inclined more than its forward side.

7. The vehicle-body rear structure of any one of the preceding claims, wherein a vehicle width inner side of the duct-outlet portion (12) is formed by a side end portion (40, 42) of the lid body constituting part (4) and in particular by a side garnish (42) of the lid body constituting part (4).

8. The vehicle-body rear structure of any one of the preceding claims, wherein said duct-forming member comprises a pillar-duct forming member (62) which is provided on an outward side, in the vehicle width direction, of a rear pillar outer panel (61c) of said rear pillar (6) so as to jointly form said duct (10) together with the rear pillar outer panel (61c) therebetween; and said side spoiler (30) is configured to protrude rearward from a rear end portion (62a) of said pillar-duct forming member (62).

9. The vehicle structure according to claim 7 and 8, wherein a forward part of a vehicle width inner side surface of said duct (10) is formed by the rear pillar outer panel (61c) and a rearward part of the vehicle width inner side surface of said duct (10) is formed by the side-end portion (40, 42) of the lid body constituting part (4), wherein the side-end portion (40, 42) preferably extends continuously with the rear pillar outer panel (61c) in the longitudinal direction.

10. The vehicle structure according to claim 7 and 8, wherein the position of the rear end portion (62a) of said pillar-duct forming member (62) matches, in the vehicle longitudinal direction, the position of the rear end of the side-end side portion (40) of the lid body constituting part (4).

11. The vehicle structure according to any one of claims 8 to 10, wherein an outer surface of the rear pillar outer panel (61c) is arranged on the inward side, in the vehicle width direction, of an outer surface of a door sash portion (14b) of the rear door (14), wherein a quarter window (15) is inclined inward in the horizontal-section view such that a rear end portion (15b) is located at an inward end, in the vehicle width direction, of the duct-inlet portion (11).

12. The vehicle structure according to claim 11, wherein the rear end portion (15b) of the quarter window (15) is joined to a front-end flange portion (6n) of the rear pillar outer panel (61c) from the vehicle outward side, wherein the rear pillar outer panel (61c) is arranged in back of and adjacently to the rear end portion (15b) of the quarter window (15) such that their outer surfaces are smoothly continuous in the longitudinal direction.

13. The vehicle structure according to any one of claims 8 to 12, wherein the pillar-duct forming portion (62) and the side spoiler (30) are formed by a duct garnish (20) that is attached to the rear pillar outer panel (61c) from the vehicle outward side so as to form the duct (10), wherein the duct garnish (20) is preferably made by hollow blow molding of a synthetic resin material.

14. The vehicle structure according to any one of the preceding claims, wherein the lid body constituting part (4) comprises a roof spoiler (41), and wherein right-and-left end portions (41b) of the roof spoiler (41) protrude obliquely outward-and-downward until their lower faces contact an upper end portion (30d) of the side spoiler (30), wherein respective rear end portions (41c, 30a) of the roof spoiler (41) and the side spoiler (30) match each other in the vehicle longitudinal direction and are smoothly continuous with each other in the vertical direction in the vehicle side view.

15. A vehicle comprising a vehicle-body rear structure according to any one of the preceding claims.
